# EUROPÄISCHE PATENTANMELDUNG

(11) **EP 1 870 565 A1**
(43) Veröffentlichungstag der Anmeldung: **26.12.2007**
(21) Anmeldenummer: 06013038.2
(22) Anmeldetag: 23.06.2006
(51) Int. Cl.: F01D 21/02, F02C 9/28

(54) **Vermeidung unzulässig hoher Drehzahlen an Turbosätzen**

(71) Anmelder: SIEMENS AKTIENGESELLSCHAFT, 80333 München (DE)
(72) Erfinder: Lindner, Rudolf, 90449 Nürnberg (DE)

(57) **Zusammenfassung**

Die Erfindung betrifft ein Verfahren zur Steuerung einer Turbine, wobei bei einem ersten Drehzahlgrenzwert (8) eine Schnellschlusseinrichtung betätigt wird, das gekennzeichnet ist durch die Vorgabe eines zweiten Drehzahlgrenzwertes (9) und eines Beschleunigungsgrenzwertes (12), so dass die Schnellschlusseinrichtung betätigbar ist, wenn entweder der erste Drehzahlgrenzwert (8) oder sowohl der zweite Drehzahlgrenzwert (9) als auch der Beschleunigungsgrenzwert (12) von jeweiligen Ist-Werten (7, 11) überschritten wird, wobei der Betrag des zweiten Drehzahlgrenzwertes (9) größer als 103% der Nenndrehzahl ist und der Betrag des Beschleunigungsgrenzwertes (12) mindestens 80% der turbosatzspezifischen Grenzbeschleunigung ist. Die Erfindung betrifft aber auch eine Schaltung zur Durchführung des Verfahrens.

## Beschreibung

Die Erfindung betrifft ein Verfahren und eine Schaltung zur Steuerung einer Turbine, wobei bei einem ersten Drehzahlgrenzwert eine Schnellschlußeinrichtung betätigt wird.

Bei Turbinen, insbesondere Turbosätzen zur Erzeugung elektrischer Energie sind Vorkehrungen zu treffen, dass im Falle einer Netztrennung und eines damit verbundenen Lastabwurfs, d.h. einer sehr schnellen Reduzierung der abzugebenden elektrischen Leistung keine unzulässig hohen Drehzahlen auftreten können. Hierfür ist ein Schnellschluß der Turbine vorgesehen, der dann anspricht, wenn nach Lastabwurf die Ist-Drehzahl der Turbine einen kritischen Wert von z.B. 110% der Nenndrehzahl erreicht bzw. übersteigt.

Durch die Trägheit der MSR-Einrichtungen und der Bauteile der Turbine, wird der Drehzahlanstieg nicht sofort unterbunden, sondern die Drehzahl übersteigt den Auslösewert zunächst, um erst danach abzusinken.

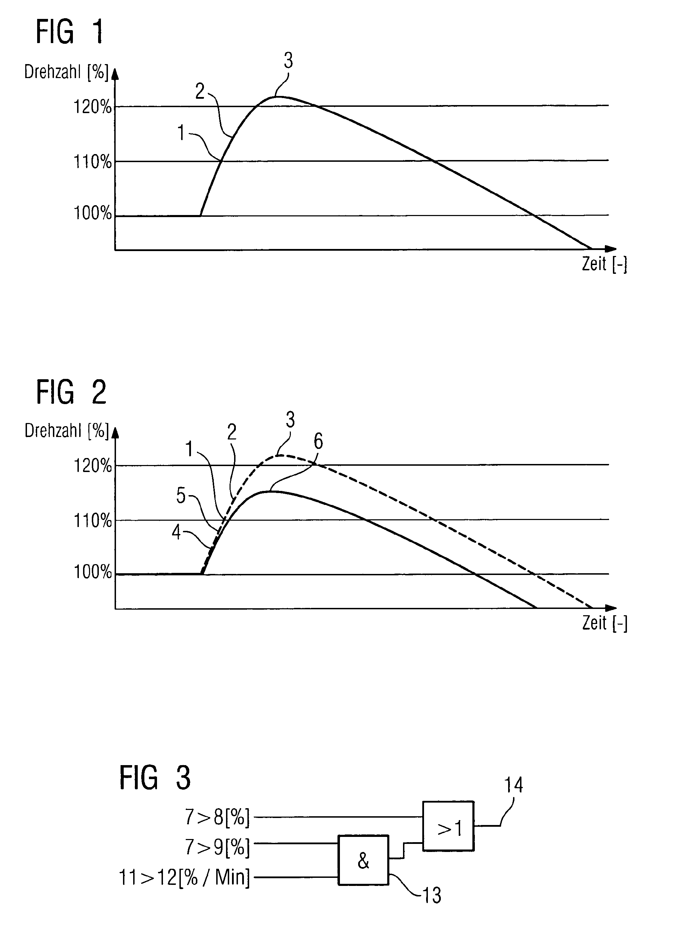

Werden bei einem Lastabwurf beispielsweise einer Dampfturbine, die einen Generator antreibt, die Regelventile durch die Regeleinrichtung nicht geschlossen ergibt sich der in Figur 1 beispielhaft dargestellte Drehzahlverlauf über die Zeit. Bei einem Punkt 1 (= erster Drehzahlgrenzwert 110%) spricht ein Überdrehzahlwächter an, so dass bei einem Punkt 2 das Schnellschlußventil geschlossen wird. Die Drehzahl steigt durch das eingeschlossene Dampfvolumen zunächst leicht parabolisch verlaufend weiter auf einen Betrag von etwas mehr als 120% der Nenndrehzahl an, um dann nach Erreichen des Zenits 3 anfangs in etwa linear abzusinken. Dieser Vorgang dauert, wie der Figur 1 zu entnehmen ist, eine gewissse Zeit.

Denkbar ist nun, dass bei dem starken Überschwingen der Drehzahl erhebliche Gefahren für rotierende Bauteile des Turbosatzes vorliegen können; denn durch die aufgrund der höheren Drehzahl entsprechend höheren Fliehkräfte der Turbine und des Generators wird eine erhebliche Zunahme radialer Zugspannungen bewirkt. Hierbei bewirkt die Zunahme der Drehzahl eine quadratische Zunahme der radialen Zugspannungen. Die auftretenden erhöhten Zugspannungen können den Turbosatz beschädigen, so dass dieser nicht mehr betriebssicher weiter betrieben werden kann. Denkbar ist beispielsweise, dass Teile der Turbine bzw. der Turbosatz erheblichen Materialbeanspruchungen ausgesetzt ist, aus denen speziell bei Bauteilen mit langer Betriebszeit oder mit Vorschädigungen mechanische Schäden resultieren können.

Die zuvor beispielhaft geschilderte nachteilige Zunahme der radialen Zugspannungen kann insbesondere bei Dampfturbinen auftreten, die zum Antrieb von Generatoren dienen. Der nachteilige Effekt kann aber auch bei Gasturbinen und bei Dampfturbinen auftreten, die als Pumpen- und/oder Verdichterantrieb dienen.

Der Erfindung liegt die Aufgabe zugrunde, ein Verfahren und eine Schaltung der Eingangs genannten Art mit einfachen Mitteln dahingehend zu verbessern, dass ein Überschwingen der Drehzahl, insbesondere bei Lastabwurf der Turbine bzw. des Turbosatzes erheblich reduziert wird.

Erfindungsgemäß wird die Aufgabe durch ein Verfahren mit den Merkmalen des Anspruchs 1 gelöst, das gekennzeichnet ist durch die Vorgabe eines zweiten Drehzahlgrenzwertes und eines Beschleunigungsgrenzwertes, so dass die Schnellschlußeinrichtung betätigbar ist, wenn sowohl der zweite Drehzahlgrenzwert als auch der Beschleunigungsgrenzwert durch jeweilige Ist-Werte überschritten bzw. erreicht wird, wobei der Betrag des zweiten Drehzahlgrenzwertes größer als 103%, bevorzugt größer als 105% der Nenndrehzahl ist und der Betrag des Beschleunigungsgrenzwertes mindestens 80% der turbosatzspezifischen Grenzbeschleunigung ist.

Damit wird ein Verfahren zur Vermeidung unzulässig hoher Drehzahlen des Turbosatzes mit einer Überdrehzahlauslösung zur Verfügung gestellt, bei dem schon bei Erreichen des zweiten Drehzahlgrenzwertes durch die Ist-Drehzahl erkannt wird, ob die Turbine unweigerlich den ersten Drehzahlgrenzwert überschreiten wird, oder ob noch die Möglichkeit eines Abfangens besteht. Mittels der vorteilhaften Überdrehzahlauslösung kann ein Überschwingen der Drehzahl erheblich reduziert werden.

Der zweite Drehzahlgrenzwert muß kleiner als der erste Drehzahlgrenzwert sein. Üblicherweise wird der erste Drehzahlgrenzwert auf einen Betrag von 110% der Nenndrehzahl und günstigerweise wird der zweite Drehzahlgrenzwert auf einen Betrag von ca. 106% der Nenndrehzahl gesetzt. Der Beschleunigungsgrenzwert wird dabei bevorzugt auf einen Betrag von 80% der turbosatzspezifischen Grenzbeschleunigung gesetzt.

Natürlich sind die bevorzugten Grenzwertbeträge lediglich beispielhaft zu verstehen und können angepasst werden. Wesentlich ist aber, dass der zweite Drehzahlgrenzwert kleiner als der erste Drehzahlgrenzwert ist.

Mittels den bevorzugten Beträgen der jeweiligen Grenzwerte kann so die Schnellschlußeinrichtung schon bei Erreichen des zweiten Drehzahlgrenzwertes (z.B. 106%) betätigt werden, wenn gleichzeitig der Beschleunigungs-Ist-Wert den Beschleunigungsgrenzwert erreicht. Ist der Beschleunigungs-Ist-Wert dagegen kleiner als der Beschleunigungsgrenzwert, so dass der Turbosatz noch abgefangen werden kann, wird die Schnellschlußeinrichtung nicht betätigt, obwohl der zweite Drehzahlgrenzwert von der Ist-Drehzahl möglicherweise überschritten wurde.

Der Beschleunigungsgrenzwert im Sinne der Erfindung ist der Wert, bei dem ein Beschleunigungsverhalten der Turbine bzw. Turbosatzes ermittelt wird, d.h. es wird bestimmt, um wie viel Umdrehungen die Turbine pro Zeiteinheit schneller dreht. Die turbosatzspezifische Grenzbeschleunigung im Sinne der Erfindung ist der Wert, der sich bei voller Leistungseinspeisung in die Turbine ergibt, wenn an der Arbeitsmaschine keine Leistung abgenommen wird (Leerlaufleistung der Turbine).

Die Erfindung wird aber auch durch eine Schaltung gemäß Anspruch 4 gelöst, die dadurch gekennzeichnet ist, dass eine Ist-Drehzahl mit dem ersten, vorgegebenen Drehzahlgrenzwert und mit dem zweiten, vorgebenen Drehzahlgrenzwert verglichen wird, wobei gleichzeitig ein Beschleunigungsverhalten mit einem vorgegebenen Beschleunigungsgrenzwert verglichen wird, wobei die Schnellschlußeinrichtung betätigbar ist, wenn sowohl der zweite Drehzahlgrenzwert als auch der Beschleunigungsgrenzwert von jeweiligen Ist-Werten überschritten wird, wobei der Betrag des zweiten Drehzahlgrenzwertes größer als 103%, vorzugsweise größer als 105% der Nenndrehzahl ist und der Betrag des Beschleunigungsgrenzwertes mindestens 80% der turbosatzspezifischen Grenzbeschleunigung ist.

Die jeweiligen Grenzwerte und die tatsächlichen Ist-Drehzahlen bzw. -Werte sind in geeigneten MSR-Einrichtungen ablegbar bzw. ermittelbar, und dort, bevorzugt als Signale in Verbindung zueinander setzbar. Vorteilhaft ist dabei, dass die Verknüpfung des Beschleunigungsgrenzwertes mit dem zweiten Drehzahlgrenzwert derart ist, dass zur Betätigung der Schnellschlußeinrichtung beide Vorraussetzungen (Erreichen bzw. Überschreiten der jeweiligen Grenzwerte durch die jeweiligen Ist-Werte) erfüllt sein müssen, so dass quasi eine UND-Verknüpfung vorliegt.

In Figur 2 ist der in Figur 1 dargestellte Verlauf (gestrichelt) über einen Verlauf (durchgezogene Linie) der Drehzahl über die Zeit gemäß dem erfindungsgemäßen Verfahren dargestellt.

Deutlich entnehmbar ist der Figur 2, dass aufgrund des Ansprechens des Überdrehzahlwächters (= zweiter Drehzahlgrenzwert 106% der Nenndrehzahl) bei dem Punkt 4 die Drehzahl leicht parabolisch verlaufend auf einen Zenitbetrag (Punkt 6) von etwa 115% der Nenndrehzahl ansteigt, wobei das Schnellschlussventil bereits bei einem Punkt 5 unterhalb von 110% der Nenndrehzahl schließt. Damit zeigt die Drehzahlkurve gemäß dem erfindungsgemäßen Verfahren ein erheblich reduziertes Überschwingen, so dass auch der Drehzahlabfall früher beginnt. Durch die Reduzierung des Überschwingens der Drehzahl bzw. der maximale erreichbaren Überdrehzahl werden gleichzeitig drastisch radiale Zugspannungen reduziert, so dass die Gefahr von Materialüberbeanspruchungen und damit möglicherweise mechanischer Schäden der Turbine bzw. des Turbosatzes deutlich reduziert sind.

Der Figur 3 ist eine beispielhafte Schaltung zur Durchführung des erfindungsgemäßen Verfahrens entnehmbar.

Gemäß der dargestellten Schaltung wird eine Drehzahl-Ist-Wert 7 mit dem ersten Drehzahlgrenzwert 8 [%] und mit dem zweiten Drehzahlgrenzwert 9 [%] verglichen, wobei gleichzeitig das Beschleunigungsverhalten 11 mit dem Beschleunigungsgrenzwert 12 [%/Min] verglichen wird. Der zweite Drehzahlgrenzwert 9 wird mit dem Beschleunigungsgrenzwert 12 bzw. dem jeweiligen Ergebnis der vorhergehenden Vergleiche bzw. Abgleiche in einer UND-Schaltung 13 verknüpft. Ergeben beide Vergleiche bzw. Abgleiche, dass die jeweiligen Ist-Werte die jeweiligen Grenzwerte erreichen bzw. überschreiten, wird über eine ODER-Verknüpfung genau so der Turbinen-Schnellschluss bei 14 ausgelöst wie bei Erreichen lediglich des ersten Drehzahlgrenzwertes 8 [%]. Demnach wird die Schnellschlusseinrichtung betätigt, wenn entweder der erste Drehzahlgrenzwert 8 oder sowohl der zweite Drehzahlgrenzwert 9 als auch der Beschleunigungsgrenzwert 12 von jeweiligen Ist-Werten 7, 11 überschritten wird.

## Patentansprüche

1. Verfahren zur Steuerung einer Turbine, wobei bei einem ersten Drehzahlgrenzwert (8) eine Schnellschlusseinrichtung betätigt wird,
**gekennzeichnet** d u r c h
die Vorgabe eines zweiten Drehzahlgrenzwertes (9) und eines Beschleunigungsgrenzwertes (12), so dass die Schnellschlusseinrichtung betätigbar ist, wenn sowohl der zweite Drehzahlgrenzwert (9) als auch der Beschleunigungsgrenzwert (12) von jeweiligen Ist-Werten (7, 11) überschritten wird, wobei der Betrag des zweiten Drehzahlgrenzwertes (9) größer als 103% der Nenndrehzahl ist und der Betrag des Beschleunigungsgrenzwertes (12) mindestens 80% der turbosatzspezifischen Grenzbeschleunigung ist.

2. Verfahren nach Anspruch 1,
**dadurch gekennzeichnet, dass**
der zweite Drehzahlgrenzwert (9) kleiner ist als der erste Drehzahlgrenzwert (8).

3. Verfahren nach Anspruch 1 oder 2,
**dadurch gekennzeichnet, dass**
der erste Drehzahlgrenzwert (8) auf einen Betrag von 110% der Nenndrehzahl gesetzt wird, wobei der zweite Drehzahlgrenzwert (9) auf einen Betrag von 106% der Nenndrehzahl gesetzt wird, und wobei der Beschleunigungsgrenzwert auf einen Betrag von mindestens 80% turbosatzspezifischen Grenzbeschleunigung gesetzt wird.

4. Schaltung zur Steuerung einer Turbine, wobei bei einem ersten Drehzahlgrenzwert (8) eine Schnellschlusseinrichtung betätigt wird insbesondere zur Durchführung des Verfahren nach einem der vorhergehenden Ansprüche,
**dadurch gekennzeichnet, dass**
eine Ist-Drehzahl (7) mit dem ersten, vorgegebenen Drehzahlgrenzwert (8) und mit einem zweiten, vorgebenen Drehzahlgrenzwert (9) verglichen wird, wobei gleichzeitig ein Beschleunigungsverhalten (11) mit einem vorgegebenen Beschleunigungsgrenzwert (12) verglichen wird, wobei die Schnellschlusseinrichtung betätigbar ist, wenn sowohl der zweite Drehzahlgrenzwert (9) als auch der Beschleunigungsgrenzwert (12) von jeweiligen Ist-Werten (7, 11) überschritten wird, wobei der Betrag des zweiten Drehzahlgrenzwertes (9) größer als 103% der Nenndrehzahl ist und der Betrag des Beschleunigungsgrenzwertes (12) mindestens 80% der turbosatzspezifischen Grenzbeschleunigung ist.

5. Schaltung nach Anspruch 4,
**dadurch gekennzeichnet, dass**
der zweite Drehzahlgrenzwert (9) und der Beschleunigungsgrenzwert (12) bzw. die Ergebnisse ob der jeweilige Ist-Wert (7, 11) den jeweiligen Grenzwert (9, 12) überschreitet in einer UND-Verknüpfung zusammengeführt werden, so dass die Schnellschlußeinrichtung erst betätigt wird, wenn beide Grenzwerte (8, 12) von den jeweiligen Ist-Werten überschritten bzw. erreicht sind.
